# EUROPEAN PATENT APPLICATION

(11) **EP 4 786 972 A1**
(43) Date of publication of application: **05.08.2026**
(21) Application number: 26155564.3
(22) Date of filing: 30.01.2026
(51) Int. Cl.: G01N 29/04, G01N 29/11, G01N 29/44, G01N 29/48, G01N 29/265

(54) **SYSTEM AND METHOD FOR INSPECTING AN ACOUSTIC LINER OF AN AIRCRAFT ENGINE**

(30) Priority: 30.01.2025 US 202519040955
(71) Applicant: Pratt & Whitney Canada Corp., (01BE5) Longueuil, QC J4G 1A1 (CA)
(72) Inventor: GONZALEZ, Jeremy, (01BE5) Longueuil, J4G 1A1 (CA); PARK, Jong, (01BE5) Longueuil, J4G 1A1 (CA)
(74) Representative: Dehns

(57) **Abstract**

A method for inspecting an acoustic liner (30) positioned in an inner cavity (34) of a component (22) of an aircraft engine (10) includes: emitting, through a drain hole (22a) of the component (22) and through a section (35; 35') of the acoustic liner (30) to be inspected, a sound signal (41a) having an initial intensity; capturing, via a sound capture device (42) positioned inside the inner cavity (34), a transmitted intensity of the sound signal (41b) following its transmission through the section (35; 35') of the acoustic liner (30) to be inspected; and determining a loss in signal intensity through the section (35; 35') of the acoustic liner (30) to be inspected by comparing the transmitted intensity to the initial intensity. Upon detecting that the loss in signal intensity is within a predetermined loss in signal intensity envelope for the acoustic liner (30), an indication that the acoustic liner (30) is acceptable is emitted.

## Description

### TECHNICAL FIELD

The disclosure relates generally to aircraft engines, and, more particularly, to the inspection of acoustic liners in aircraft engines.

### BACKGROUND

Aircraft engine casings typically include acoustic treatments, for instance acoustic liners, to mitigate noise and better comply with various industry standards. To ensure the acoustic treatments perform as intended, various inspection techniques have been proposed. However, improvements are sought.

### SUMMARY

In an aspect of the present invention, there is provided a method for inspecting an acoustic liner in an aircraft engine, the acoustic liner positioned in an inner cavity of a component of the aircraft engine, the method comprising: emitting, through a drain hole of the component and through a section of the acoustic liner to be inspected, a sound signal having an initial intensity; capturing, via a sound capture device positioned inside the inner cavity, a transmitted intensity of the sound signal following its transmission through the section of the acoustic liner to be inspected; determining a loss in signal intensity through the section of the acoustic liner to be inspected by comparing the transmitted intensity to the initial intensity; and upon detecting that the loss in signal intensity is within a predetermined loss in signal intensity envelope for the acoustic liner, emitting an indication that the acoustic liner is acceptable.

The method as defined above and described herein also includes, in certain embodiments, one or more of the following steps and/or features, in whole or in part, and in any combination.

In an embodiment of the above, the method includes, prior to the emitting the sound signal, the capturing the transmitted intensity of the sound signal, the determining the loss in signal intensity, and the emitting the indication that the acoustic liner is acceptable, establishing the predetermined loss in signal intensity envelope for the acoustic liner by performing the emitting the sound signal, the capturing the transmitted intensity of the sound signal, and the determining the loss in signal intensity through a reference acoustic liner in a known acceptable condition.

In an embodiment according to any of the previous embodiments, the method includes, when the loss in signal intensity falls outside of the predetermined loss in signal intensity envelope: receiving an indication, following a subsequent evaluation of the acoustic liner, that the acoustic liner is accepted; and modifying the predetermined loss in signal intensity envelope to include the loss in signal intensity.

In an embodiment according to any of the previous embodiments, the method includes establishing the predetermined loss in signal intensity envelope for the acoustic liner includes establishing a minimum acceptable loss in signal intensity and a maximum acceptable loss in signal intensity.

In an embodiment according to any of the previous embodiments, the method includes: directing the sound capture device towards a second section of the acoustic liner to be inspected; capturing, via the sound capture device, a second transmitted intensity of the sound signal following its transmission through the acoustic liner; determining a second loss in signal intensity through the second section of the acoustic liner to be inspected by comparing the second transmitted intensity to the initial intensity; and upon detecting that the loss in signal intensity and the second loss in signal intensity are within a predetermined loss in signal intensity envelope for the acoustic liner, emitting the indication that the acoustic liner is acceptable.

In an embodiment according to any of the previous embodiments, the method includes covering a non-inspected section of the acoustic liner with a soundproof blanket, the non-inspected section of the acoustic liner including a region outside of the section of the acoustic liner to be inspected.

In an embodiment according to any of the previous embodiments, the method includes capturing the transmitted intensity of the sound signal following its transmission through the acoustic liner further includes filtering out a sound signal transmitted through a non-inspected section of the acoustic liner, the non-inspected section of the acoustic liner including a region outside of the section of the acoustic liner to be inspected.

In another aspect of the present invention, there is also provided a system for inspecting an acoustic liner in an aircraft engine, the acoustic liner positioned in an inner cavity of a component of the aircraft engine, the system comprising: a processing unit; and a non-transitory computer-readable memory communicatively coupled to the processing unit and comprising computer-readable program instructions executable by the processing unit for: emitting, through a section of the acoustic liner to be inspected, a sound signal having an initial intensity; capturing, via a sound capture device positioned inside the inner cavity, a transmitted intensity of the sound signal following its transmission through the section of the acoustic liner to be inspected; determining a loss in signal intensity through the section of the acoustic liner to be inspected by comparing the transmitted intensity to the initial intensity; and upon detecting that the loss in signal intensity is within a predetermined loss in signal intensity envelope for the acoustic liner, emitting an indication that the acoustic liner is acceptable.

The system as defined above and described herein also includes, in certain embodiments, one or more of the following features, in whole or in part, and in any combination.

In an embodiment of the above, the processing unit is further configured for, prior to the emitting the sound signal, the capturing the transmitted intensity of the sound signal, the determining the loss in signal intensity, and the emitting the indication that the acoustic liner is acceptable, establishing the predetermined loss in signal intensity envelope for the acoustic liner by performing the emitting the sound signal, the capturing the transmitted intensity of the sound signal, and the determining the loss in signal intensity through a reference acoustic liner in a known acceptable condition.

In an embodiment according to any of the previous embodiments, the processing unit is further configured for, when the loss in signal intensity falls outside of the predetermined loss in signal intensity envelope: receiving an indication, following a subsequent evaluation of the acoustic liner, that the acoustic liner is accepted; and modifying the predetermined loss in signal intensity envelope to include the loss in signal intensity.

In an embodiment according to any of the previous embodiments, establishing the predetermined loss in signal intensity envelope for the acoustic liner includes establishing a minimum acceptable loss in signal intensity and a maximum acceptable loss in signal intensity.

In an embodiment according to any of the previous embodiments, the processing unit is further configured for: directing the sound capture device towards a second section of the acoustic liner to be inspected; capturing, via the sound capture device, a second transmitted intensity of the sound signal following its transmission through the acoustic liner; determining a second loss in signal intensity through the second section of the acoustic liner to be inspected by comparing the second transmitted intensity to the initial intensity; and upon detecting that the loss in signal intensity and the second loss in signal intensity are within a predetermined loss in signal intensity envelope for the acoustic liner, emitting the indication that the acoustic liner is acceptable.

In an embodiment according to any of the previous embodiments, a non-inspected section of the acoustic liner is covered with a soundproof blanket, the non-inspected section of the acoustic liner including a region outside of the section of the acoustic liner to be inspected.

In an embodiment according to any of the previous embodiments, capturing the transmitted intensity of the sound signal following its transmission through the acoustic liner further includes filtering out a sound signal transmitted through a non-inspected section of the acoustic liner, the non-inspected section of the acoustic liner including a region outside of the section of the acoustic liner to be inspected.

In another aspect of the present invention, there is further provided a system for inspecting an acoustic liner mounted in a component of an aircraft engine, the acoustic liner formed at least partially of a porous material, the system comprising: a sound generating device positioned outside of the component, the sound generating device adapted to emit a sound signal having an initial intensity; a sound capturing device positioned inside the acoustic liner, the sound capturing device adapted to capture a transmitted intensity of the sound signal following its transmission through a section of the acoustic liner to be inspected; and a controller adapted to determine a loss in signal intensity through the section of the acoustic liner to be inspected by comparing the transmitted intensity to the initial intensity, and determine an acceptability of the acoustic liner by comparing the loss in signal intensity to a predetermined loss in signal intensity envelope for the acoustic liner.

The system as defined above and described herein also includes, in certain embodiments, one or more of the following features, in whole or in part, and in any combination.

In an embodiment of the above, the controller is adapted to establish the predetermined loss in signal intensity envelope by determining the loss in signal intensity through a reference acoustic liner in a known acceptable condition.

In an embodiment according to any of the previous embodiments, the controller is adapted to modify the predetermined loss in signal intensity envelope following receipt of an indication that the acoustic liner, judged to be unacceptable by the controller, was judged to be of acceptable condition in a subsequent evaluation.

In an embodiment according to any of the previous embodiments, the predetermined loss in signal intensity envelope is bounded by a minimum acceptable loss in signal intensity and a maximum acceptable loss in signal intensity.

In an embodiment according to any of the previous embodiments, the sound capturing device is adapted to be directed through a plurality of sections of the acoustic liner and capture a transmitted intensity of the sound signal through each of the plurality of sections of the acoustic liner.

In an embodiment according to any of the previous embodiments, a soundproof blanket covers a non-inspected section of the acoustic liner, the non-inspected section of the acoustic liner including a region outside of the section of the acoustic liner to be inspected.

### BRIEF DESCRIPTION OF THE DRAWINGS

Reference is now made to the accompanying figures in which:
FIG. 1 is a schematic cross sectional view of a gas turbine engine;
FIG. 2 is a schematic cross sectional view of an acoustic liner for the engine of FIG. 1;
FIGS. 3A-3B are perspective and exploded perspective views, of a section of the acoustic liner of FIG. 2;
FIG. 4 is a schematic cross sectional view depicting an exemplary inspection system of the acoustic liner of FIG. 2;
FIG. 5 is a flowchart depicting an exemplary inspection method for the acoustic liner of FIG. 2;
FIG. 6 is a schematic depiction of step 102 from the method shown in FIG. 5;
FIG. 7 is a schematic depiction of step 104 from the method shown in FIG. 5;
FIG. 8 is a schematic depiction of step 106 from the method shown in FIG. 5;
FIG. 9 is a schematic depiction of step 110 from the method shown in FIG. 5;
FIG. 10 is a schematic depiction of step 114 from the method shown in FIG. 5;
FIG. 11 is a schematic depiction of step 120 from the method shown in FIG. 5;
FIG. 12 is a flowchart depicting another exemplary inspection method for the acoustic liner of FIG. 2; and

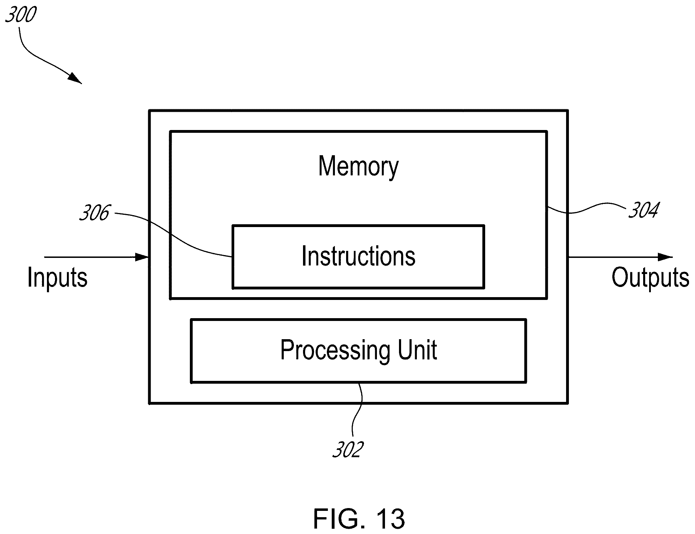

FIG. 13 is a block diagram of an example computing system for implementing the methods of FIGS. 5 and 12.

### DETAILED DESCRIPTION

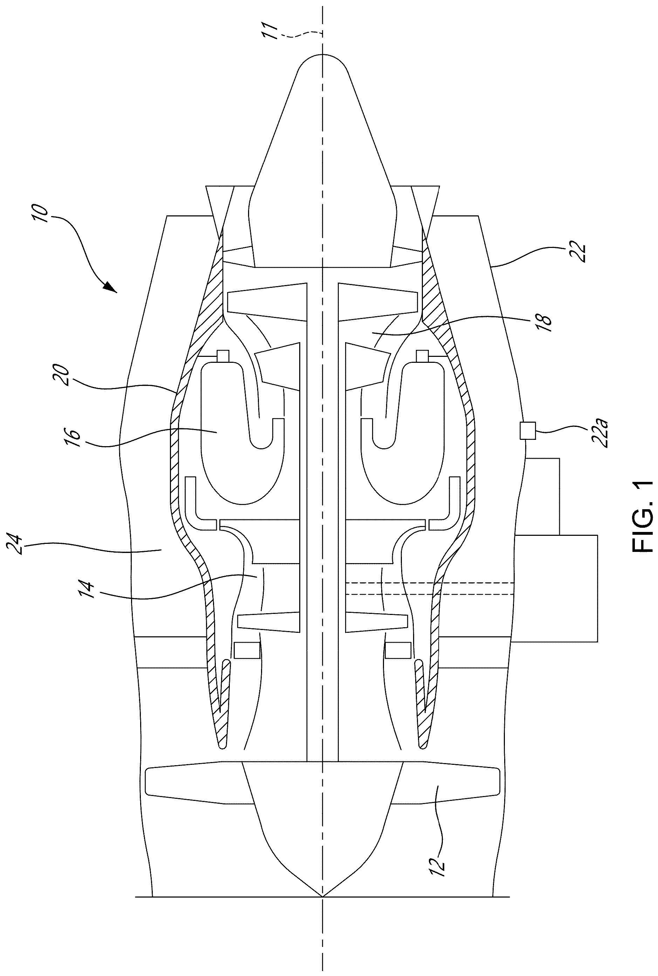

FIG. 1 illustrates a gas turbine engine 10 of a type preferably provided for use in subsonic flight, generally comprising in serial flow communication, along a central engine axis 11, a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A core casing 20 surrounds the compressor section 14, combustor 16, and turbine section 18. A bypass duct 22 surrounds the core casing 20 and defines an annular bypass passage 24 therebetween. The bypass duct 22 is formed of an annular body having one or more drain holes 22a at a lower end thereof (i.e., below the axis 11) along the axial length of the bypass duct 22. While FIG. 1 depicts engine 10 as a turbofan engine, it is understood that other aircraft engine types are contemplated.

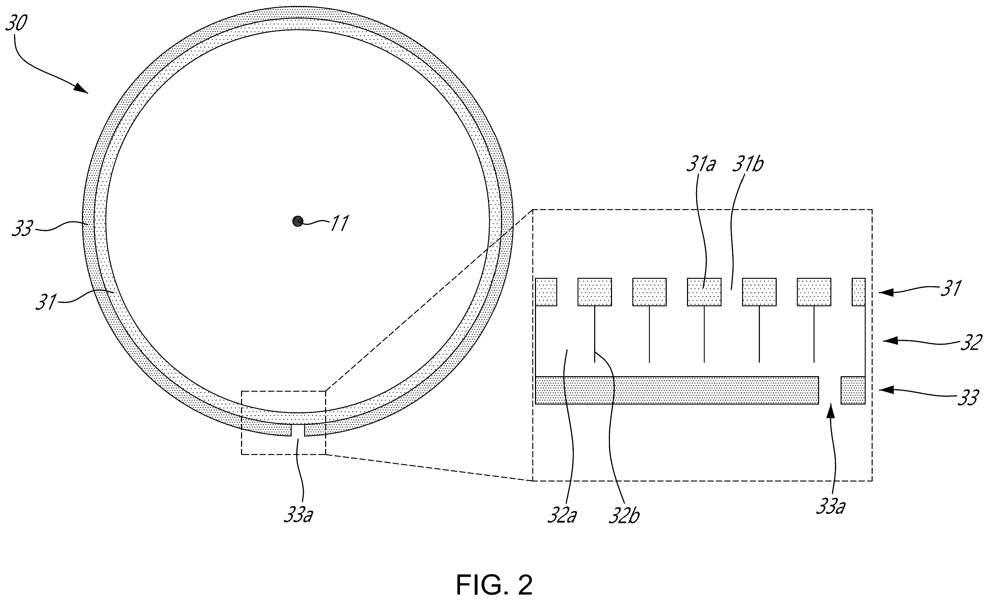

Referring to FIGS. 2-3B, there is shown an exemplary acoustic liner 30 for the engine 10 that is adapted to absorb and dissipate noise energy. As noted above, one or more acoustic liners 30 are provided in the engine 10 to mitigate noise generated by the engine 10, for instance to comply with various industry standards and optimize the comfort of aircraft passengers. Illustratively, the acoustic liner 30 has an annular cross sectional shape and is mounted to a radially inner surface of the bypass duct 22, or of another casing or duct of the engine 10 (or alternately a nacelle of the aircraft) at one or more predetermined locations along the axis 11 where sound mitigation is required. It is understood that the acoustic liner 30 can be used to mitigate sound in other components of the engine 10, for instance in an inner duct or a fan case. Additionally, the acoustic liner 30 can also be used within a nacelle of the aircraft, which receives the engine 10, for mitigating sound therein. In one embodiment, an acoustic liner 30 is provided at or near the inlet of the engine 10, or at one or more locations surrounding the bypass passage 24. Other locations for the acoustic liner 30 are also contemplated. The depicted acoustic liner 30 is formed of a partially porous material. In particular, the acoustic liner 30 illustratively includes a porous top layer 31, a honeycomb cell structure 32, and an impermeable bottom layer 33, forming a sandwich-like structure. It is understood that the porous top layer 31 is exposed to an inner cavity of the bypass duct 22 while the impermeable bottom layer 33 faces towards and/or is abutted against a radially inner surface of a casing or nacelle of the engine. Other constructions for the acoustic liner 30 are contemplated. One or more drain holes 33a through the impermeable bottom layer 33 are provided at a lower portion of the acoustic liner 30 (i.e., below the axis 11) to drain liquids inside the acoustic liner 30. The drain hole(s) 33a are thus in fluid communication with the drain hole(s) 22a of the nacelle to purge the liquids from the engine 10. While the depicted acoustic liner 30 is shown is a single degree of freedom (SDOF) liner, it is understood that other liner types, such as a double degree of freedom (DDOF) having two honeycomb cell structure 32 layers, are contemplated. In addition, the liner 30 can include various surface materials such as a perforated surface or a felt metal surface. Stated differently, the liner 30 may include a single or multi layered enclosure with a surface that provides some resistance to the flow of air, thereby providing a required degree of sound mitigation.

The depicted porous top layer 31 includes a sheet 31a with perforations 31b disposed through the sheet. The sizing and number of the perforations 31b can vary, for instance, to target a specific range of frequencies to attenuate. The porous top layer 31 is exposed to the airflow flowing through the engine 10. The honeycomb cell structure 32 includes a plurality of honeycomb cells 32a separated by honeycomb separators 32b with drainage holes 32c at lower ends thereof. As noted above, the impermeable bottom layer 33 is formed of an impermeable sheet having one or more drain hole(s) 33a extending therethrough. In use, the honeycomb cell structure 32 is a lightweight and high stiffness structure that provides surface impedance to incident sound waves due to the volume of air enclosed therein.

As noted above, one or more acoustic liners 30 are provided to mitigate noise for lower noise emissions. In particular, the perforations 31b in the porous top layer 31 of the acoustic liner 30 can be specifically sized and shaped to target a range of noise attenuation frequencies. Stated differently, the performance of the acoustic liner 30 is influenced by the perforations 31b, and the condition thereof. For instance, in a manufacturing process of the acoustic liner 30, adhesives such as glue resins are used to bond the various layers of the acoustic liner 30. **In** some cases, the perforations 31b can become blocked or clogged by the adhesive, which can negatively affect the noise mitigating properties of the acoustic liner 30. Therefore, various inspection techniques have been contemplated for evaluating the performance or condition of the acoustic liner 30, for instance to determine a level of blockage of the perforations 31b.

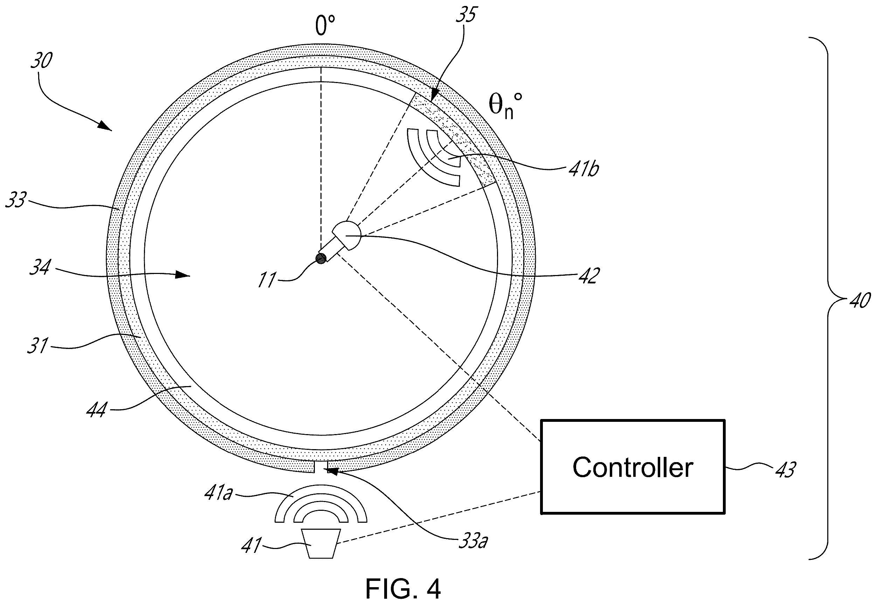

Referring now to FIG. 4, there is shown a system 40 for inspecting an acoustic liner 30 in an aircraft engine 10, according to an embodiment of the present disclosure. As discussed above, the acoustic liner 30 is positioned inside a component (e.g., a bypass duct 22, an engine casing, or a nacelle of the engine 10. The system 40 includes a sound generating device 41 positioned outside of the acoustic liner 30, a sound capturing device 42 positioned inside an inner cavity 34 of the acoustic liner 30, and a controller 43 operatively coupled to one or both of the sound generating device 41 and the sound capturing device 42 (illustratively to both the sound generating device 41 and the sound capturing device 42). An optional soundproof blanket 44 is also shown. As discussed in further detail below, the sound generating device 41 is adapted to generate and transmit an initial sound signal 41a having a predetermined initial intensity, through the acoustic liner 30, into the inner cavity 34 of the acoustic liner 30. The sound capturing device 42 is then adapted to capture a transmitted sound signal 41b (i.e., initial sound signal 41a transmitted through the acoustic liner 30) and measure an intensity of the transmitted sound signal 41b. The controller 43 is then adapted to compare the transmitted intensity to the initial intensity to determined a loss in signal intensity for the acoustic liner 30, which is then used to judge the acceptability of the acoustic liner 30 and emit an indication (e.g., a signal, audible and/or visible warning, etc.) that the acoustic liner 30 is acceptable. Stated differently, the system 40 is adapted to judge the performance of the acoustic liner 30 to determiner whether it is in a satisfactory condition to perform its intended sound mitigating functions. For instance, the calculated loss in signal intensity for a given acoustic liner 30 corresponds to the percentage to which the holes through the acoustic liner 30 are blocked (for instance due to remnants of glue resin). **In** some cases, the loss in signal intensity is defined by an insertion loss. Other ways of quantifying the loss in signal intensity are contemplated, for instance a loss spectrum or a spectrum difference.

Still referring to FIG. 4, the sound generating device 41, also referred to as a source of a sound signal, is positioned outside of the bypass duct 22 and inserted through the drain hole 22a. The nature of the sound generating device 41 can vary. For instance, in some embodiments, the sound generating device 41 is adapted to generate and transmit the signal as a broadband spectrum (e.g., white noise). In other embodiments, the sound generating device 41 is adapted to transmit a specific tone, for instance at an ultrasonic frequency. Other configurations for the sound generating device 41 are contemplated. The sound capturing device 42, illustratively a microphone, is adapted to capture the transmitted sound signal 41b and is thus designed to capture the type(s) of signals emitted by the sound generating device 41. Various types of sound capturing devices 42 are contemplated. In some embodiments, the sound capturing device 42 is adapted to capture sound signals emanating from a specific direction. While FIG. 4 shows the controller 43 as being a separate component from the sound generating device 41 and the sound capturing device 42, it is understood that in some embodiments the sound generating device 41 and/or the sound capturing device 42 are provided with an integrated controller 43. **In** such cases, more than one controller 43 can be provided, each controlling a designated aspect of the system 40. As discussed in further detail below, the controller(s) 43 is/are adapted to control the sound generating device 41 and sound capturing device 42, as well as to store data pertaining to the quality assessment of the acoustic liner 30 and to output a judgment as to the quality or acceptability of the acoustic liner 30.

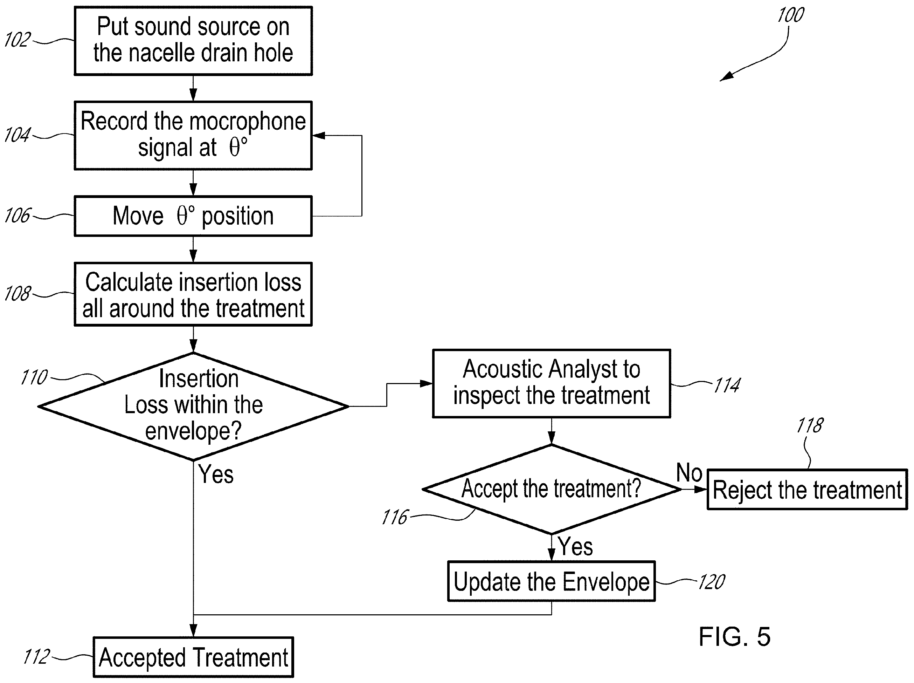

Referring now to FIG. 5, there is shown a flowchart depicting an exemplary inspection method for an acoustic liner in an aircraft engine 10, for instance acoustic liner 30 disposed in a component (e.g., the bypass duct 22) of the engine 10.

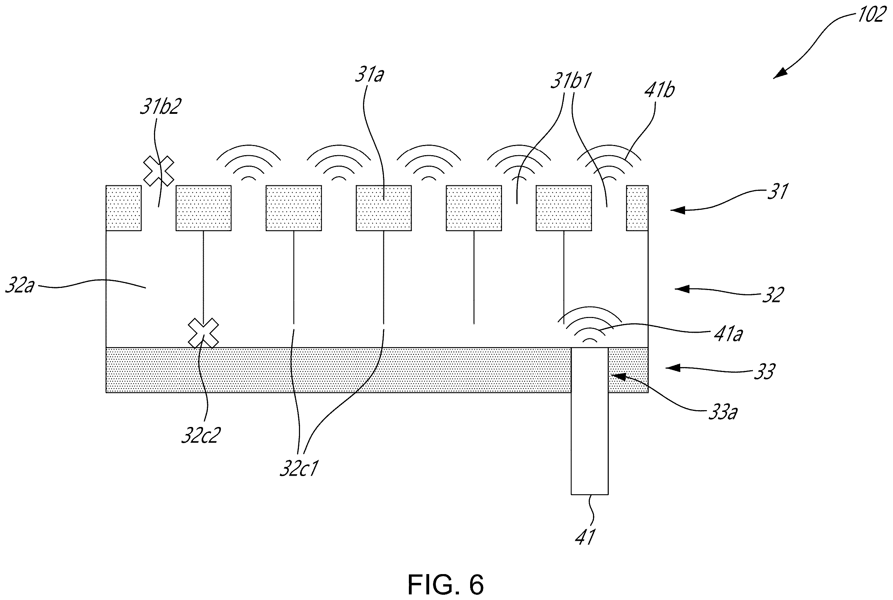

Referring to FIGS. 5 and 6, at step 102, the sound generating device 41 is inserted through the drain hole 22a of the bypass duct 22. In the embodiment shown in FIG. 6, the sound generating device 41 is inserted through the drain hole 33a in the bottom layer 33 of the liner 30. In other cases, the sound generating device 41 is adapted to emit the emitted sound signal 41a through the drain hole 33a without physically extending therethrough. FIG. 6 further depicts an exemplary condition of the liner 30. In particular, FIG. 6 shows perforations 31b and honeycomb separators 32b in both unblocked (31b1, 32c1) and blocked (31b2, 32c2) conditions. Such blockages can be, for instance, due to remnants of glue resin used during the manufacturing of the acoustic liner 30, although other causes of the blockages are contemplated.

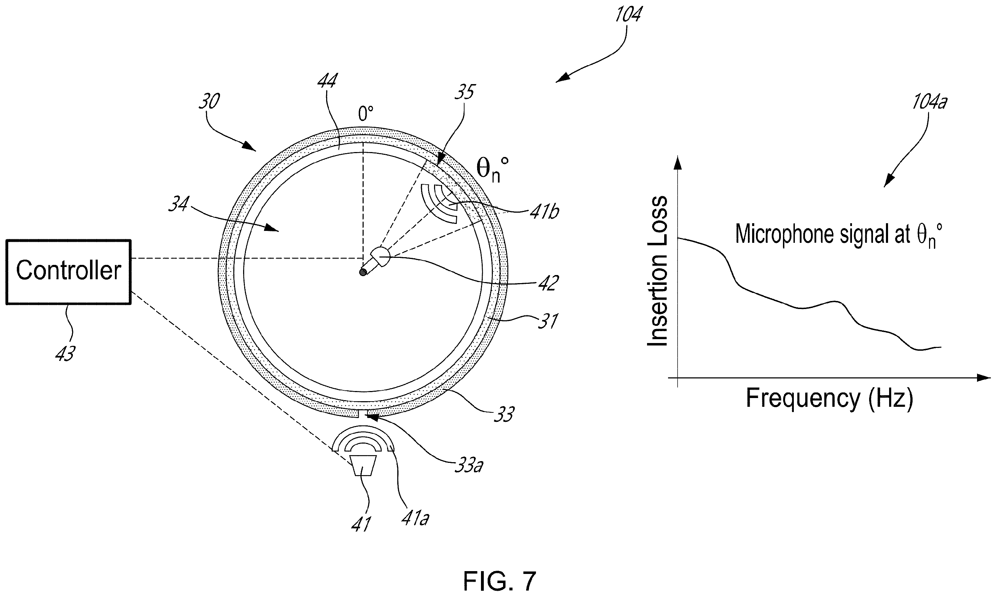

Referring to FIGS. 5 and 7, at step 104, the sound capturing device 42 captures or records the emitted sound signal 41b for a given section 35 of the acoustic liner 30 to be inspected. Illustratively, this section 35 is represented by an arcuate segment about the inner circumference of the acoustic liner 30 having an angle θₙ, the magnitude of which can vary. In the shown case, the optional soundproof blanket 34 is disposed about the entirety of the inner circumference of the acoustic liner 30 but for the section 35 to be inspected. As such, the sound capturing device 42 will only be exposed to the transmitted signal 41b transmitted through the section 35 to be inspected, with the soundproof blanket 44 blocking the transmission of sound signals through a non-inspected section or region of the acoustic liner 30. Other configurations for isolating the desired signal 41b are contemplated. For instance, in an embodiment, the sound capturing device 42 includes directional capabilities such that it is oriented towards the section 35 to be inspected and adapted to capture only the transmitted signal 41b through the section 35 to be inspected in isolation. Other configurations, for instance, signal processing to isolate the transmitted signal 41b through the section 35 to be inspected, are contemplated. At 104a, an exemplary graph depicting the frequency of the emitted signal 41a and an insertion loss, for instance via controller 43, through the section 35 to be inspected is shown. This calculated insertion loss informs the condition of the acoustic liner 30, as will be discussed in further detail below.

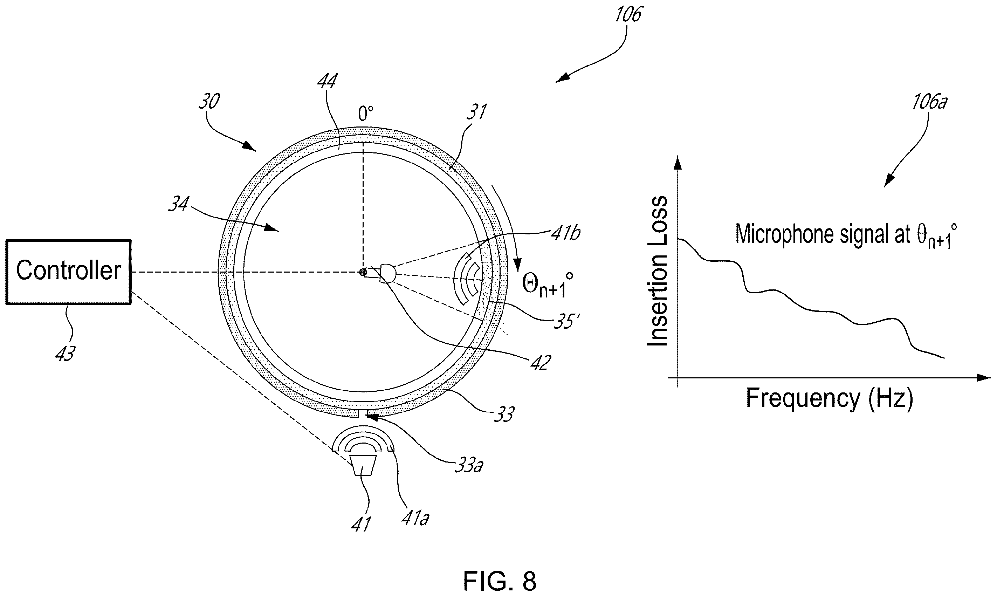

Referring to FIGS. 5 and 8, at step 106, the process of step 104 is repeated for a subsequent section 35', illustratively at an angular position θₙ₊₁, is performed. Illustratively, the soundproof blanket 44 is displaced so as to expose only the section 35' to the sound capturing device 42. Additionally or alternatively, the sound capturing device 42 is reoriented to be directed only towards the section 35'. As in the above step, at 106a, an insertion loss is calculated based on the frequency of the emitted signal 41a for the section 35'.

Referring to FIG. 5, at step 108, the above steps 104 and 106 are repeated so that an insertion loss is calculated for the entire inner circumference of the acoustic liner 30. The number of iterations can vary, for instance, based on the breadth of each section 35, 35' being inspected. It is also understood that, in some cases, it may be desirable to only inspect a portion (and not the entirety of) the acoustic liner 30, i.e., by inspecting only one or more sections 35, 35' of the acoustic liner 30. In some cases, an insertion loss of the entire acoustic liner 30 is determined by taking an average of the individual calculated insertion losses for each section 35, 35' of the acoustic liner 30. Other ways of calculating an insertion loss representative of the entire acoustic liner 30 are contemplated, for instance by selecting the section 35 with the greatest calculated insertion loss (or an average of a number of sections 35 having the greatest insertion losses) to represent the entire acoustic liner 30. Other processes for calculating the insertion loss for the entire acoustic liner 30 are contemplated. For instance, a three-dimensional insertion loss (i.e., level, frequency and theta) can be calculated. It is thus understood that the two-dimensional graphical depictions shown and described herein are exemplary only.

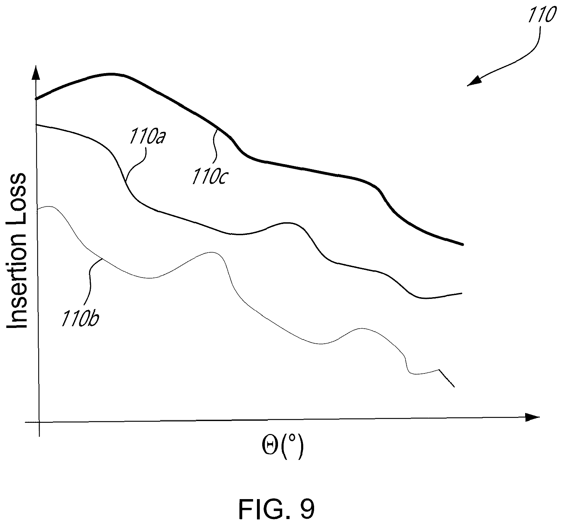

Referring to FIGS. 5 and 9, at step 110, the calculated insertion loss for the acoustic liner 30 (shown as 110a in FIG. 9) is compared, for instance by the controller 43, to a predetermined insertion loss envelope for the acoustic liner 30. The establishment of the predetermined insertion loss envelope will be discussed in further detail below. Illustratively, the predetermined insertion loss envelope is bounded by a minimum acceptable insertion loss profile 110b and a maximum acceptable insertion loss profile 110c. Stated differently, a given acoustic liner 30 is expected to filter or mitigate a certain level of noise to be considered effective (i.e., at least the minimum acceptable insertion loss profile 110b). However, too great of a calculated insertion loss (i.e., beyond the maximum acceptable insertion loss profile 110c), for instance due to one or more blockages in the acoustic liner 30 would not be considered acceptable. In the exemplary embodiment of FIG. 9, the calculated insertion loss 110a is positioned between the minimum 110b and maximum 110c acceptable insertion losses profiles, indicating that the acoustic liner 30 is in an acceptable condition. As such, at step 112, an output is generated, for instance by the controller 43, indicating that the acoustic liner 30 is in an acceptable condition and is suitable for use in the engine 10.

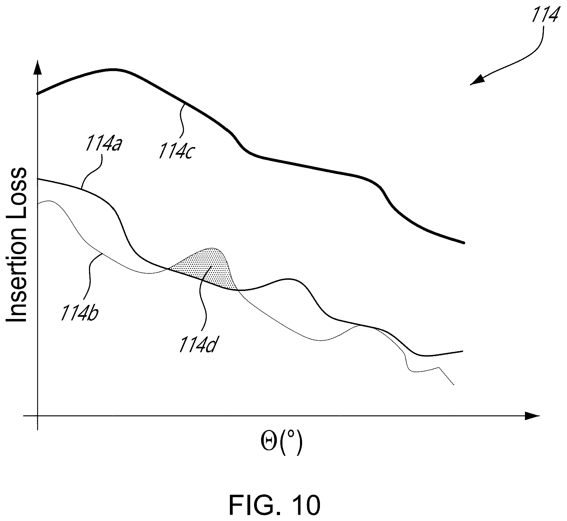

Referring to FIGS. 5 and 10, an exemplary depiction of a non-acceptable acoustic liner 30 is shown at step 114. In this graphical depiction, the calculated insertion loss for the acoustic liner 30 (shown as 114a in FIG. 10) is shown at 114d, to at least partially fall below the minimum acceptable insertion loss profile 114b. A determination thus must be made, at step 116, if the acoustic liner 30 is to be accepted or rejected. In particular, a subsequent inspection of the acoustic liner 30 is to be performed to determine the acceptability of the acoustic liner 30. For instance, a detailed manual inspection of the acoustic liner 30 is performed by an acoustic specialist is performed. Other subsequent inspection techniques are contemplated. If the subsequent inspection confirms that the acoustic liner 30 is unsatisfactory, the acoustic liner 30 is rejected at step 118. If, on the other hand, the subsequent inspection determines that the acoustic liner 30 is indeed in an acceptable condition, the method 100 proceeds to step 120. It is understood that a subsequent inspection would similarly be required if the calculated insertion loss 114a were to be at least partially above the maximum acceptable insertion loss profile 114c.

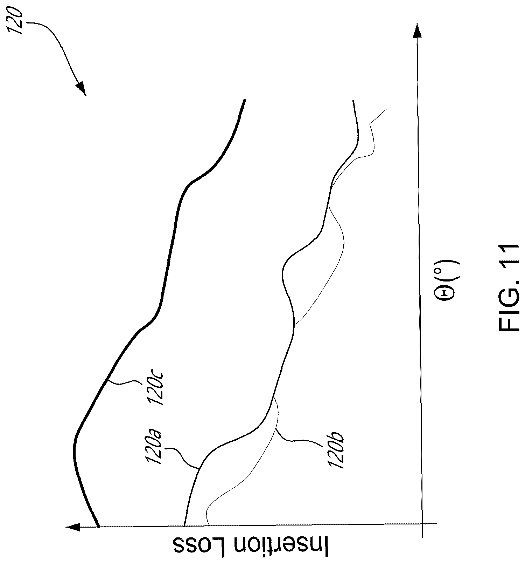

Referring to FIGS. 5 and 11, as noted above, at step 120 the insertion loss envelope is updated in response to the subsequent inspection process deeming that an initially rejected acoustic liner 30 is in fact in acceptable condition. As shown in FIG. 11, the minimum acceptable insertion loss profile 120b is adapted to reflect the acceptability of the calculated insertion loss profile 120a of the acoustic liner 30. In other cases, the maximum acceptable insertion loss profile 120c is adapted. By way of step 120, the insertion loss envelope is kept up to date in an iterative manner, ensuring that the judgment of the acceptability of a given acoustic liner 30 is as accurate as possible. Following step 120, the acoustic liner 30 deemed acceptable at the subsequent inspection step is accepted at step 112. In embodiments, the recursive nature of the above-described method is integrated in a machine learning model to continuously define and update the insertion loss envelope for a given group of acoustic liners 30 having the same properties and the same target conditions (i.e., for a same engine 10).

As noted above, in order to perform the above method 100, an insertion loss envelope is to be predetermined for a given acoustic liner 30 (i.e., acoustic liners 30 that are used in a given engine 10). Various processes for establishing the predetermined insertion loss envelope for a given acoustic liner 30 are contemplated. In an embodiment, the steps of method 100 are carried out on one or more like acoustic liners 30 being in acceptable conditions. As such, the above transmitting and capturing steps are carried out to obtain a plurality of insertion loss profiles indicative of an acceptable acoustic liner 30 (i.e., in a known acceptable condition). These profiles are used to build the predetermined insertion loss envelope for a given acoustic liner 30. As such, when a same acoustic liner 30 is to be evaluated, its calculated insertion loss by way of method 100 is compared to the predetermined insertion loss envelope to judge its acceptability. As discussed above, the insertion loss envelope is constantly updated based on ongoing evaluations of acoustic liners 30 to improve its accuracy. **It** is understood that the controller 43 can be adapted to store predetermined insertion loss envelopes for different acoustic liners 30 such that the system 40 is adapted to evaluate a plurality of models of acoustic liners 30 for different engines 10. Other processes for establishing the predetermined insertion loss envelope are contemplated.

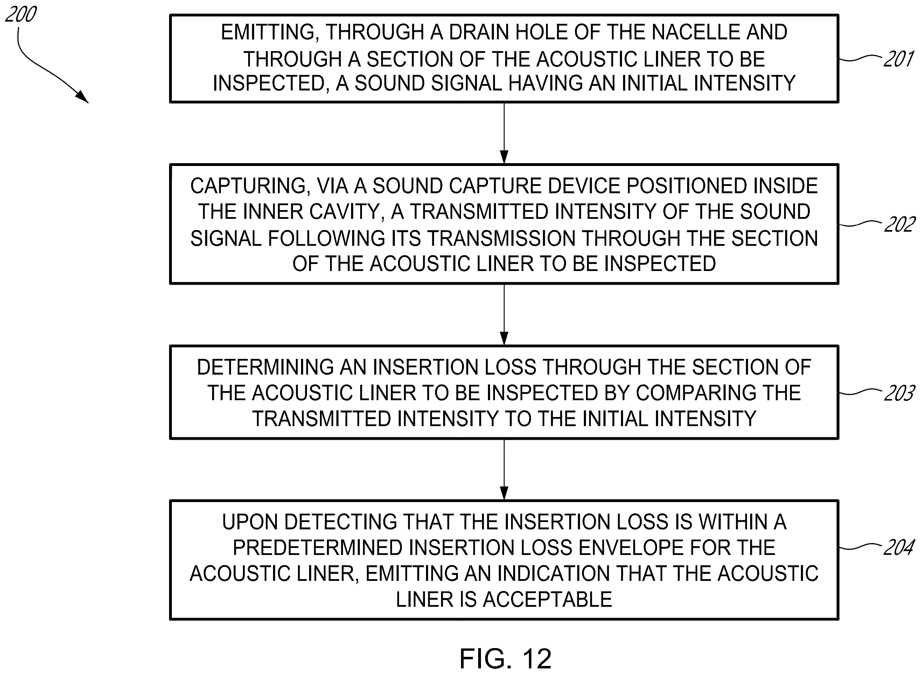

Referring now to FIG. 12, another exemplary method 200 for inspecting an acoustic liner 30 in an aircraft engine 10 is shown, with the acoustic liner 30 positioned in an inner cavity of a component (e.g., a bypass duct 22) of the engine 10.

At step 201, a sound signal 41a having an initial intensity is emitted through a drain hole 22a of the bypass duct 22 and through a section 35 of the acoustic liner 30 to be inspected.

At step 202, a transmitted intensity of the sound signal 41b, following its transmission through the section 35 of the acoustic liner 30 to be inspected, is captured via a sound capturing device 42.

At step 203, an insertion loss through the section 35 of the acoustic liner 30 to be inspected is determined by comparing the transmitted intensity to the initial intensity.

At step 204, upon detecting that the insertion loss is within a predetermined insertion loss envelope for the acoustic liner 30, an indication that the acoustic liner 30 is acceptable is emitted.

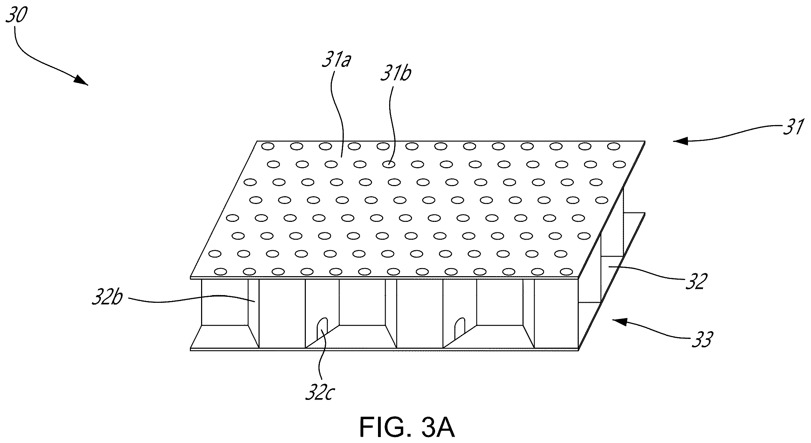

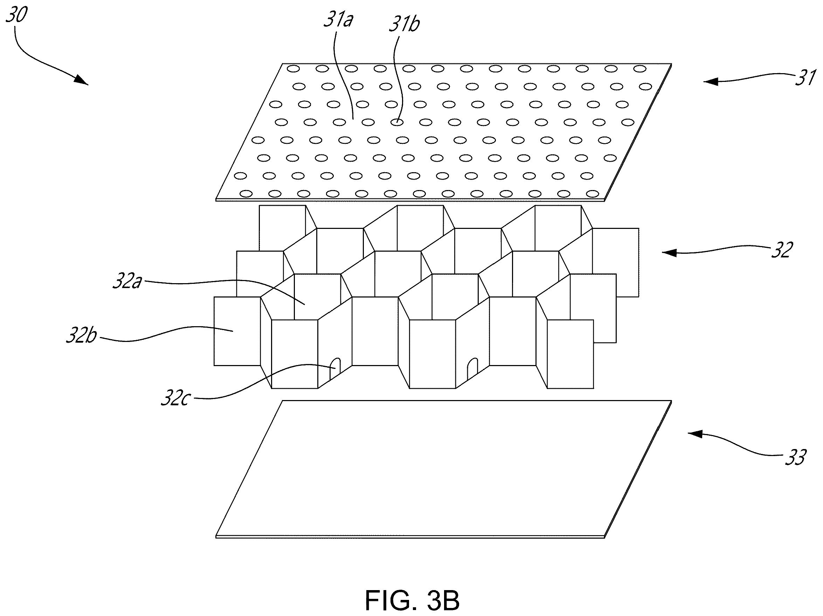

With reference to FIG. 3, in some embodiments, the methods 100, 200 may be implemented using a computing device 300 (for instance that includes controller(s) 43) comprising a processing unit 302 and a memory 304 which has stored therein computer-executable instructions 306. The processing unit 302 may comprise any suitable devices configured to implement the system 40 such that instructions 306, when executed by the computing device 300 or other programmable apparatus, may cause the functions/acts/steps of the methods 100, 200 as described herein to be executed. The processing unit 302 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, other suitable processing systems or circuits, or any combination thereof.

The memory 304 may comprise any suitable known or other machine-readable storage medium. The memory 304 may comprise non-transitory computer readable storage medium, for example, but not limited to, an electronic, magnetic, optical, electromagnetic, infrared, or semiconductor system, apparatus, or device, or any suitable combination of the foregoing. The memory 304 may include a suitable combination of any type of computer memory that is located either internally or externally to the device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 304 may comprise any storage means (e.g., devices) suitable for retrievably storing machine-readable instructions 306 executable by processing unit 302. In some embodiments, the computing device 300 can be implemented as part of a full-authority digital engine controls (FADEC) or other similar devices, including electronic engine control (EEC), engine control unit (ECU), and the like.

The methods and systems described herein may be implemented in a high level procedural or object oriented programming or scripting language, or a combination thereof, to communicate with or assist in the operation of a computer system, for example the computing device 300. Alternatively, the methods and systems may be implemented in assembly or machine language. The language may be a compiled or interpreted language. Program code for implementing the methods and systems for detection may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise computer-readable instructions which cause a computer, or in some embodiments the processing unit 302 of the computing device 300, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

According to the present disclosure, there is provided a method and system for inspecting the quality of an acoustic liner in an aircraft engine by emitting a sound signal through the acoustic liner, capturing the sound signal transmitted through the acoustic liner, and comparing the intensities of the signals to determine an insertion loss indicative of the quality or condition of the acoustic liner. By comparing the obtained insertion losses to a well-defined insertion loss envelope that is continuously updated based on data obtained in the methods and systems described herein, the envelope is used as a reference to which other like acoustic liners (i.e., for a same engine) can subsequently be compared to.

**It** is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

**It** is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A method for inspecting an acoustic liner (30) in an aircraft engine (10), the acoustic liner (30) positioned in an inner cavity (34) of a component (22) of the aircraft engine (10), the method comprising:
emitting, through a drain hole (22a) of the component (22) and through a section (35; 35') of the acoustic liner (30) to be inspected, a sound signal (41a) having an initial intensity;
capturing, via a sound capture device (42) positioned inside the inner cavity (34), a transmitted intensity of the sound signal (41b) following its transmission through the section (35; 35') of the acoustic liner (30) to be inspected;
determining a loss in signal intensity through the section (35; 35') of the acoustic liner (30) to be inspected by comparing the transmitted intensity to the initial intensity; and
upon detecting that the loss in signal intensity is within a predetermined loss in signal intensity envelope for the acoustic liner (30), emitting an indication that the acoustic liner (30) is acceptable.

2. The method as defined in claim 1, further comprising, prior to the emitting the sound signal (41a), the capturing the transmitted intensity of the sound signal (41b), the determining the loss in signal intensity, and the emitting the indication that the acoustic liner (30) is acceptable, establishing the predetermined loss in signal intensity envelope for the acoustic liner (30) by performing the emitting the sound signal (41a), the capturing the transmitted intensity of the sound signal (41b), and the determining the loss in signal intensity through a reference acoustic liner (30) in a known acceptable condition.

3. The method as defined in claim 2, further comprising, when the loss in signal intensity falls outside of the predetermined loss in signal intensity envelope:
receiving an indication, following a subsequent evaluation of the acoustic liner (30), that the acoustic liner (30) is accepted; and
modifying the predetermined loss in signal intensity envelope to include the loss in signal intensity.

4. The method as defined in claim 2 or 3, wherein establishing the predetermined loss in signal intensity envelope for the acoustic liner (30) includes establishing a minimum acceptable loss in signal intensity and a maximum acceptable loss in signal intensity.

5. The method as defined in any preceding claim, further comprising:
directing the sound capture device (42) towards a second section (35') of the acoustic liner (30) to be inspected;
capturing, via the sound capture device (42), a second transmitted intensity of the sound signal (41b) following its transmission through the acoustic liner (30);
determining a second loss in signal intensity through the second section (35') of the acoustic liner (30) to be inspected by comparing the second transmitted intensity to the initial intensity; and
upon detecting that the loss in signal intensity and the second loss in signal intensity are within a predetermined loss in signal intensity envelope for the acoustic liner (30), emitting the indication that the acoustic liner (30) is acceptable.

6. The method as defined in any preceding claim, further comprising covering a non-inspected section of the acoustic liner (30) with a soundproof blanket (44), the non-inspected section of the acoustic liner (30) including a region outside of the section (35; 35') of the acoustic liner (30) to be inspected.

7. The method as defined in any preceding claim, wherein capturing the transmitted intensity of the sound signal (41b) following its transmission through the acoustic liner (30) further includes filtering out a sound signal (41a) transmitted through a non-inspected section of the acoustic liner (30), the non-inspected section of the acoustic liner (30) including a region outside of the section (35; 35') of the acoustic liner (30) to be inspected.

8. A system (40) for inspecting an acoustic liner (30) in an aircraft engine (10), the acoustic liner (30) positioned in an inner cavity (34) of a component (22) of the aircraft engine (10), the system (40) comprising:
a processing unit (302); and
a non-transitory computer-readable memory (304) communicatively coupled to the processing unit (302) and comprising computer-readable program instructions (306) executable by the processing unit (302) for performing the method of any of the preceding claims.

9. A system (40) for inspecting an acoustic liner (30) mounted in a component (22) of an aircraft engine (10), the acoustic liner (30) formed at least partially of a porous material, the system (40) comprising:
a sound generating device (41) positioned outside of the component (22), the sound generating device (41) adapted to emit a sound signal (41a) having an initial intensity;
a sound capturing device (42) positioned inside the acoustic liner (30), the sound capturing device (42) adapted to capture a transmitted intensity of the sound signal (41b) following its transmission through a section (35; 35') of the acoustic liner (30) to be inspected; and
a controller (43) adapted to determine a loss in signal intensity through the section (35; 35') of the acoustic liner (30) to be inspected by comparing the transmitted intensity to the initial intensity, and determine an acceptability of the acoustic liner (30) by comparing the loss in signal intensity to a predetermined loss in signal intensity envelope for the acoustic liner (30).

10. The system (40) as defined in claim 9, wherein the controller (43) is adapted to establish the predetermined loss in signal intensity envelope by determining the loss in signal intensity through a reference acoustic liner (30) in a known acceptable condition.

11. The system (40) as defined in claim 10, wherein the controller (43) is adapted to modify the predetermined loss in signal intensity envelope following receipt of an indication that the acoustic liner (30), judged to be unacceptable by the controller (43), was judged to be of acceptable condition in a subsequent evaluation.

12. The system (40) as defined in claim 10 or 11, wherein the predetermined loss in signal intensity envelope is bounded by a minimum acceptable loss (110b) in signal intensity and a maximum acceptable loss (110c) in signal intensity.

13. The system (40) as defined in any one of claims 9 to 12, wherein the sound capturing device (42) is adapted to be directed through a plurality of sections (35; 35') of the acoustic liner (30) and capture a transmitted intensity of the sound signal (41b) through each of the plurality of sections (35; 35') of the acoustic liner (30).

14. The system (40) as defined in any one of claims 9 to 13, further comprising a soundproof blanket (44) covering a non-inspected section of the acoustic liner (30), the non-inspected section of the acoustic liner (30) including a region outside of the section (35; 35') of the acoustic liner (30) to be inspected.
